# EUROPEAN PATENT APPLICATION

(11) **EP 1 426 655 A2**
(43) Date of publication of application: **09.06.2004**
(21) Application number: 03257237.2
(22) Date of filing: 17.11.2003
(51) Int. Cl.: F16G 13/04

(54) **A silent chain for restraining chordal action**

(30) Priority: 06.12.2002 JP 2002354698
(71) Applicant: BorgWarner Morse TEC Japan K.K., Nabari, Mie 518-0495 (JP)
(72) Inventor: Kotera, Tetsuji, Nabari Mie 518-0495 (JP)
(74) Representative: Lerwill, John

(57) **Abstract**

A silent chain for restraining chordal action and improving noise and oscillation performance comprising a plurality of link plates each having a pair of teeth and pin apertures interlaced in link thickness and length directions and pivotably connected by connecting pins inserted in the pin apertures. Each of the teeth are formed of an inside flank and an outside flank. The inside flank of a first link plate projects from the outside flank of a second link plate whose one tooth overlaps a tooth of the first link plate when the chain is pulled straight. The inside flank and the outside flank are formed in such a way that 0.021 *P≤δmax≤0.063*p is satisfied where P is a chain pitch and δmax is a maximum projection of the inside flank of the first link plate relative to the outside flank of the adjacent second link plate.

## Description

### FIELD OF THE INVENTION

The present invention pertains to the field of silent chains. More particularly, an improvement in structure to restrain chordal oscillation of a chain span of a silent chain and to improve noise and oscillation performance.

### DESCRIPTION OF RELATED ART

Silent chains have been used as a power transmission chain in automobiles, motorcycles and the like. A silent chain is generally comprised of a plurality of link plates each having a pair of teeth and pin apertures, arranged in lateral and longitudinal directions, and pivotably connected by connecting pins inserted in the pin apertures. Each of the teeth are formed of an inside flank and an outside flank. During operation of a silent chain, power is transmitted from a drive sprocket to a driven sprocket through the engagement of the inside flank and/or the outside flank with a sprocket tooth.

Chordal action, or oscillation of a chain span, occurs at the time of engagement of the chain with a sprocket, in this case the silent chain wraps around the sprocket polygonally. In order to prevent such a chordal action and to reduce noise, as shown in Japanese patent application laying-open publication No. 8-74940, the same inventor as the present invention, proposed a silent chain where a radius of curvature R of an inside flank of a link plate is made more than generally double the length of a chain pitch P, so that the link plate is raised through the inside flank at the time of engagement with a sprocket tooth.

The above prior art application is directed to lifting up a chain span to a position in the vicinity of a vertex of polygonal shaped movements of the chain around the sprocket. However, it has been found that in the actual product, a lift-up of a chain span becomes insufficient at times due to errors in manufacture and assembly and as a result, a chordal action cannot be perfectly removed.

### SUMMARY OF THE INVENTION

The present invention is directed to a silent chain where a plurality of link plates each having a pair of teeth and pin apertures are interlaced in link thickness and length directions and pivotably connected by connecting pins inserted in the pin apertures. Each of the teeth are formed of an inside flank and an outside flank. An inside flank of one link plate projects from an outside flank of another link plate whose tooth overlaps a tooth of one link when a chain is pulled straight. The inside flank and the outside flank are formed in such a way that 0.021 *P≤δmax≤0.063*p is satisfied where P is a chain pitch and δmax is a maximum projection of the inside flank relative to the outside flank.

At the time of engagement with a sprocket, an inside flank of the link plate contacts and interferes with a sprocket tooth and the chain span is lifted up. At this time, since the maximum projection of the inside flank satisfy the above-mentioned inequality, interference of the inside flank with the chain is determined at an appropriate value. Therefore, when the silent chain engages with the sprocket, the chain is lifted up at least to a position that is a vertex of polygonal shaped movements of the chain around the sprocket. The position is located at a position further up than the range of chordal movements of the silent chain that engages the sprocket teeth only at the outside flanks of link plates. Thereby, at the time of engagement with a sprocket, the chain span may be lifted up to a position that is hard to be influenced by a chordal action of a chain span. As a result, a chordal action can be securely restrained and noise and oscillation performance can be advanced.

Preferably, the inside flank and the outside flank are formed in such a way that 0.035*P≤δmax≤0.063*p is satisfied. In this case, at the time of engagement with a sprocket, a chain span may be lifted up to a position that is very hard to be influenced by a chordal action of a chain span. As a result, a chordal action can be further securely refrained and noise and oscillation performance can be further advanced. Preferably, the outside flank is formed of a flat surface and the inside flank is formed of a circular arc surface.

According to another aspect of the present invention, the link plates of the chain are comprised of a first link plate having a first maximum projection δ₁max and a second link plate having a second maximum projection δ₂max that is different from δ₁max. The first and second link plates are disposed in a random pattern along the length of a chain. In this case, at the time of engagement with a sprocket, a first lift-up of a chain span by the first link plate differs from a second lift-up of a chain span by the second link plate, and the first and second lift-up is repeated aperiodically. Thereby, when the chain engages with the sprocket at an upper position that is not affected by chordal action of a chain span, periodical chordal oscillation of a chain span can be restrained and thus, noise and oscillation performance can be further improved as compared to the engagement where constant lift-up is periodically repeated.

According to still another aspect of the present invention, the silent chain is a random chain where link plates are formed of a first link plate having a first chain pitch P₁ and a second link plate having a second chain pitch P₂ that is different from P₁, and the first and second link plates are disposed at a random pattern along the length of a chain. In this case, at the time of engagement with a sprocket, a first engagement by the first link plate and a second engagement by the second link plate where the engaging position is different from the first engagement are repeated aperiodically. Thereby, when the chain engages with the sprocket, at an upper position that is not affected by chordal action of a chain span, periodical chordal oscillation of a chain span can be restrained and thus, noise and oscillation performance can be further improved as compared to the periodic engagement where the entire chain pitch is constant.

### BRIEF DESCRIPTION OF THE DRAWING

FIG. 1 is an enlarged front elevational view of two adjacent link plates in a row that forms a silent chain according to an embodiment of the present invention.
FIG. 2 is a schematic illustrating engaging state of a silent chain with a sprocket.
FIG. 3 is a graph showing interrelation between a rotational cycle of a sprocket tooth and a chain lift-up.
FIG. 4 is a graph showing the result of sound level measurement test.

### DETAILED DESCRIPTION OF THE INVENTION

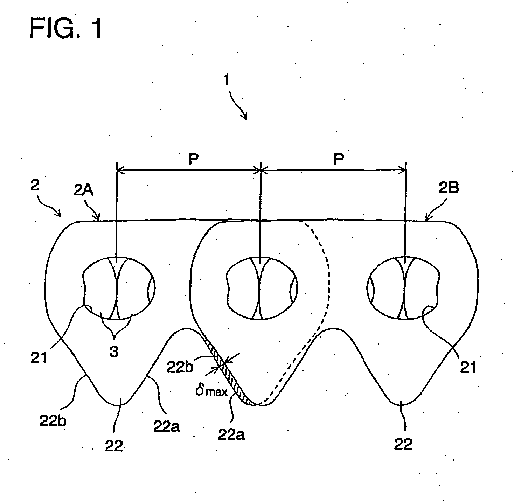

As shown in FIG. 1, each of link plates 2 forming a silent chain 1 includes a pair of pin apertures 21 and teeth 22. A pair of connecting pins 3 inserted in the pin apertures 21 pivotably connects adjacent link plates 2A and 2B. Each of the teeth 22 of the link plates 2 are composed of an inside flank 22a and an outside flank 22b. The inside flank 22a is formed of a curved surface, preferably a circular arc surface, and the outside flank 22b is preferably formed of a flat surface.

As shown in FIG. 1, when the chain 1 is pulled straight, the inside flank 22a of link plate 2A is located beyond the outside flank 22b of the tooth of link plate 2B that overlaps tooth 22 of the link plate 2A. At this time, an equality, 0.021*P≤δmax≤0.063*p, is satisfied, where P is the chain pitch defined by the distance between contact points of an adjacent pair of connecting pins 3 and δmax is the maximum projection of the inside flank 22a of the link plate 2A relative to the outside flank 22b of the adjacent link plate 2B.

Here, the maximum projection δmax of the inside flank 22a of the link plate 2A refers to the maximum value of the projection of the inside flank 22a of the link plate 2A from the outside flank 22b of the adjacent link plate 2B (see hatching portion in FIG. 1) when the chain 1 is pulled straight. Also, more preferably, an equality, 0.035*P≤δmax≤0.063*p is satisfied.

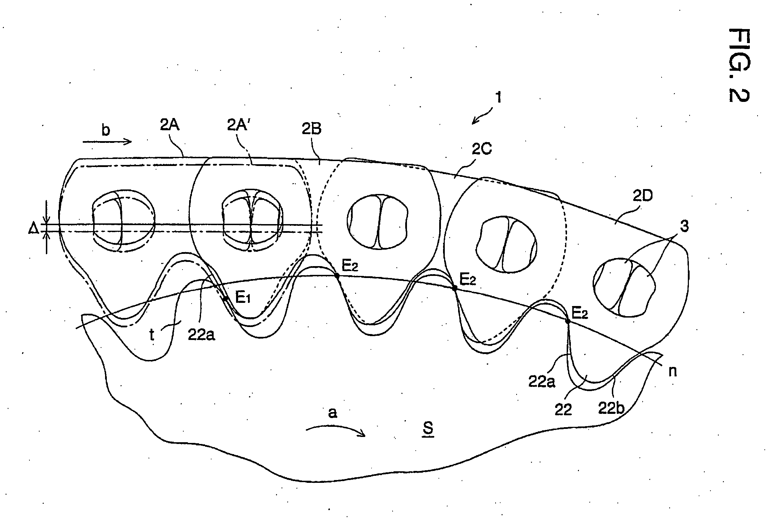

Next, engagement of the above-mentioned silent chain 1 with a sprocket will be described using FIG. 2. In FIG.2, an arrow mark "a" indicates the rotational direction of a sprocket S, and an arrow mark "b" indicates the running direction of a silent chain 1. Reference numerals 2A, 2B, 2C, and 2D indicate link plates that are located in a row from the retarding side of the engagement to the leading side thereof, respectively.

At the time of initial engagement with the sprocket S, the link plate 2A is lifted upwardly through contact with sprocket tooth t at Point E₁ on the addendum side of the inside flank 22a. Thereby, a chain span or a chain chord (not shown) extending from the retarding side of the link plate 2A (on the left side of FIG.2) is lifted upwardly. The lift-up Δ of the link plate 2A at this time is shown by the distance from the position of the initial engagement of a link plate A' that engages only an outside flank from initial to final engagement with a sprocket.

When the engagement proceeds and the link plate 2A moves to the position of the link plate 2B, the engagement point with sprocket tooth t is transferred to Point E₂ on the addendum side from Point E₁ along the inside flank 22a. The link plate 2A further moves to the positions of link plates 2C and 2D with the engagement with the sprocket tooth t maintained at Point E₂. In FIG. 2, a circular arc connecting each of the engaging points E₂ forms an engagement pitch line n.

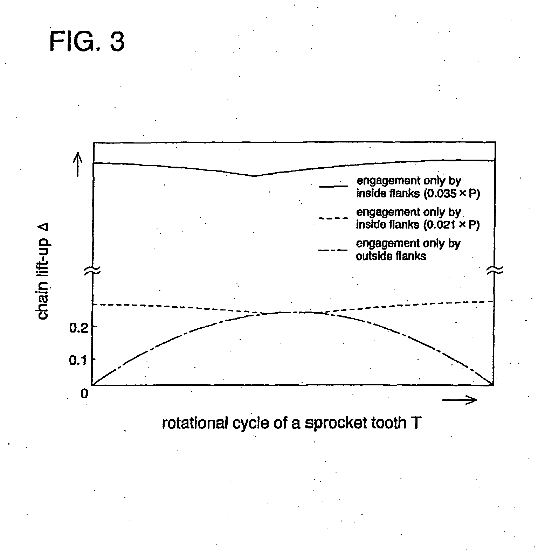

FIG. 3 shows the amount of a lift-up of the chain span during a rotational cycle of a sprocket tooth. In FIG. 3, a dash-and-dot line indicates the variation of the chain lift-up Δ during rotation of one sprocket tooth in the case of a chain that engages a sprocket tooth only on the outside flanks of the link plates. A dotted line indicates the variation of the chain lift-up Δ during rotation of one sprocket tooth in the case of a chain (δmax=0.021*P) that engages a sprocket tooth only on the inside flanks of the link plates. A solid line indicates the variation of the chain lift-up Δ during rotation of one sprocket tooth in the case of a chain (δmax=0.035*P) that engages a sprocket tooth only on the inside flanks of the link plates. As shown by the dash-and-dot line, when a sprocket rotates one tooth thereof, or 360°/z (z: the number of sprocket teeth), lift-up Δ of a chain span by the sprocket gradually grows greater with the rotational speed of the sprocket and becomes the maximum value at time T/2 (T: rotational period). The lift -up Δ of a chain span by the sprocket gradually grows smaller with the rotational speed of a sprocket thereafter, and becomes zero at time T.

In contrast, as shown in a dotted line in FIG. 3, in the case of the chain that engages only on the inside flanks of link plates, where each link plate has a maximum projection of δmax(=0.021*P), when a sprocket rotates one tooth thereof, lift-up Δ of a chain span by the sprocket hardly varies during time T from the initial engagement and maintains the value of about 0.25. At time T/2, the dotted line generally contacts the apex of the dash-and-dot line.

As can be seen from FIG. 3, in the case where a silent chain having a chain lift-up Δ as shown by the dash-and-dot line, engages with the sprocket, the chain is lifted up to a position upper than the range of chordal action acted by the sprocket during engagement with the chain having a chain lift-up Δ as shown in a dotted line. Such a position is the vertex of a polygonal shaped movements of a chain, or a higher position than the vertex. Thereby, at the time of engagement with the sprocket, a chain span can be lifted up to a position where chordal action of the chain span is hardly influential. As a result, chordal action can be securely restrained and noise and oscillation performance can be improved.

As shown by the solid line of FIG. 3, in the case of a chain that engages only at the inside flanks of link plates, where each of the link plates has a maximum projection of δmax(=0.035*P), when a sprocket rotates one tooth thereof, lift-up Δ of a chain span by the sprocket maintains at the considerably higher position than the dash-and-dot line and the dotted line during time T from the initial engagement. Thereby, in this case, at the time of engagement with the sprocket, the chain span may be lifted up to a position where chordal action of the chain span is more hardly influential. As a result, chordal action can be more securely restrained and noise and oscillation performance can be further improved.

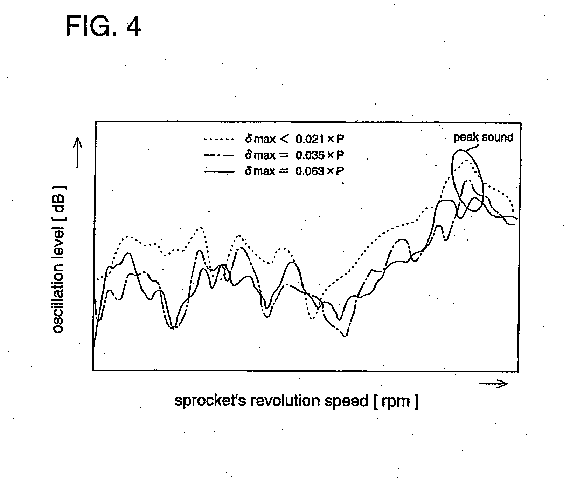

FIG. 4 shows the result of a sound level measuring test of various kinds of chains. In FIG. 4, the dotted line indicates a silent chain comprised of link plates whose inside flank's maximum projection δmax is lower than 0.021*P. The dash-and-dot line indicates a silent chain comprised of link plates whose inside flank's maximum projection δmax is equal to 0.035*P. The solid line indicates a silent chain composed of link plates whose inside flank's maximum projection δmax is equal to 0.063*P. As can be seen from each of the lines in FIG. 4, in the case of δmax=0.035*P and δmax=0.063*P, oscillation level are decreased in the entire region of sprocket rotational speeds as compared to the case of δmax<0.021*P. In particular, when compared at peak level, in either the case of δmax=0.035*P or δmax=0.063*P, peak level is securely decreased as compared to the case of δmax<0.021*P. Additionally, in FIG. 4, the case of δmax=0.021*P is not shown, but it may be predicted that the peak level of the case of δmax=0.021*P will be disposed at a position slightly lower than the peak level of the dotted line.

Therefore, when an inside flank and an outside flank of each link plate are formed in such a way that inequality, 0.021 *P≤δmax≤0.063*p is satisfied, more preferably, 0.035*P≤δmax≤0.063*p is satisfied, peak sound level of oscillation can be securely reduced.

In the above-mentioned embodiment, the maximum projections δmax of the entire link plates comprising a silent chain are predetermined at specified values that satisfy either of the above-mentioned inequalities, but the present invention is not limited to this embodiment.

In an alternative embodiment, a projection-random silent chain may be composed by disposing a first link row formed of first link plates each having a first maximum projection δ₁max (e.g. δ₁max=0.035) and a second link row formed of second link plates each having a second maximum projection δ₂max (e.g. δ₂max=0.063) different from the maximum projection δ1max randomly along the length of the chain. In this case, when the chain engages with a sprocket, a first chain lift-up Δ by the first link plate and a second chain lift-up Δ by the second link plate are different, and the first and second lift-up Δ are aperiodically repeated.

Thereby, at the time of engagement with a sprocket, a periodical chordal movement of a chain span may be restrained at an upper position where chordal action is hard to affect. As a result, noise and oscillation performance may be further improved as compared to the case of engagement where a constant chain lift-up Δ is periodically repeated.

In another embodiment, a pitch-random silent chain may be composed by disposing a first link row formed of first link plates each having a first chain pitch P₁ and a second link row formed of second link plates each having a second chain pitch P₂ different from the first chain pitch P₁ randomly along the length of the chain. In this case, as with the previous embodiment, when a chain engages with a sprocket, an engagement by a first link plate and an engagement by a second link plate are aperiodically repeated. Thereby, at the time of engagement with a sprocket, at an upper position where chordal action is hard to affect, noise and oscillation performance may be further improved as compared to the case of periodic engagement by the link plates each having a constant chain pitch.

In another alternative embodiment, a projection-random and pitch-random silent chain may be composed by combining the previous two embodiments. The projection-random portion of the silent chain may be composed by disposing a first link row formed of first link plates each having a first maximum projection δ₁max (e.g. δ₁max=0.035) and a second link row formed of second link plates each having a second maximum projection δ₂max (e.g. δ₂max=0.063) different from the maximum projection δ1max randomly along the length of the chain and the pitch-random portion of the silent chain may be composed by disposing a first link row formed of first link plates each having a first chain pitch P₁ and a second link row formed of second link plates each having a second chain pitch P₂ different from the first chain pitch P₁ randomly along the length of the chain. In this case, noise and oscillation performance may be much further improved.

In the above-mentioned embodiment, a silent chain of inside-flank-engagement-type from initial to final engagement was shown, but the present invention can also be applied to a silent chain that engages from an inside flank at the initial engagement and engages at an outside flank at the final engagement. Moreover, a rocker-joint-type silent chain was shown in the above-mentioned embodiment, but the present invention can also be applied to a silent chain using round pins as connecting pins.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A silent chain for restraining chordal action and improving noise and oscillation performance comprising:
a plurality of link plates interleaved in rows, each link plate having a pair of teeth, each tooth of the pair of teeth having an inside flank and outside flank;
the inside flank and the outside flank being formed such that when the chain is pulled straight the inside flank of a first link plate in a link row projects relative to the outside flank of a second link plate in another link row adjacent to and overlapping with the link row, satisfying a relationship 0.021*P≤δmax≤0.063*P, where P is a chain pitch and δmax is a maximum projection of the inside flank of the first link plate relative to the outside flank of the second link plate.

2. The silent chain of claim 1, wherein the inside flank and the outside flank are formed such that 0.035≤P*δmax≤0.063*p is satisfied.

3. The silent chain of claim 1 or 2, wherein the outside flank is formed of a flat surface and the inside flank is formed of a circular arc surface.

4. The silent chain of claim 1, 2 or 3 wherein the link plates further comprise a first link plate having a first maximum projection δ₁max and a second link plate having a second maximum projection δ₂max, different than the first maximum projection δ₁max, wherein the first link plate and the second link plate are in a random pattern along the length of the chain.

5. The silent chain of any one of claims 1 to 4, wherein the link plates further comprise a first link plate having a first chain pitch P₁ and a second link plate having a second chain pitch P₂, different than the first chain pitch P₁, wherein the first link plate and the second link plate are in a random pattern along the length of the chain.
